# EUROPÄISCHE PATENTANMELDUNG

(11) **EP 1 174 378 A2**
(43) Veröffentlichungstag der Anmeldung: **23.01.2002**
(21) Anmeldenummer: 01114624.8
(22) Anmeldetag: 19.06.2001
(51) Int. Cl.: B65H 23/032

(54) **Einrichtung zur Erfassung der Lage einer Kante eines transparenten Materials, Bahnkantensteuerung und Druckmaschine**

(30) Priorität: 20.07.2000 DE 10035249
(71) Anmelder: NexPress Solutions LLC, Rochester, New York 14653-5007 (US)
(72) Erfinder: Metzler, Patrick, 24214 Gettorf (DE); Peter, Karlheinz, 24113 Molfsee (DE); Spilz, Rolf, 24214 Gettorf (DE); Theden, Stefan, 24106 Kiel (DE)
(74) Vertreter: Weber, Walter, Dipl.-Ing.(FH)

(57) **Zusammenfassung**

Die Erfindung betrifft eine Einrichtung zur Erfassung der Lage einer Kante (2) eines transparenten, anisotropen Materials (3, 3') bestehend aus mindestens einem Sensor (1) mit einer Lichtquelle (4), zwei Polarisationsfiltern (6, 7) mit um 90° gekreuzten Transmissionsachsen (8, 9) sowie einem Lichtempfänger (10), wobei sich die Lichtquelle (4) und ein Polarisationsfilter (6) auf einer Seite der zu erfassenden Kante (2) und der zweite Polarisationsfilter (7) und der Lichtempfänger (10) auf der anderen Seite befinden.

Eine derartige Einrichtung soll so ausgestaltet werden, daß sie ohne Montagearbeiten für die Erfassung von Material (3, 3') mit unterschiedlich ausgerichteten optischen Achsen (14) einsetzbar ist. Dies wird dadurch erzielt, daß der mindestens eine Sensor (1) derart anordenbar und/oder ausgebildet ist, daß unterschiedliche Winkel (32) zwischen der Transmissionsachse (8) des ersten Polarisationsfilters (6) und der optischen Achse (14) des transparenten, anisotropen Materials (3, 3') möglich sind. Die Erfindung sieht weiterhin eine Bahnkantensteuerung (16) und eine Druckmaschine mit einer solchen vor.

## Beschreibung

Die Erfindung betrifft eine Einrichtung zur Erfassung der Lage einer Kante eines transparenten anisotropen Materials bestehend aus mindestens einem Sensor mit einer Lichtquelle, zwei Polarisationsfiltern mit um 90° gekreuzten Transmissionsachsen sowie einem Lichtempfänger, wobei sich die Lichtquelle und ein Polarisationsfilter auf einer Seite der zu erfassenden Kante und der zweite Polarisationsfilter und der Lichtempfänger auf der anderen Seite befinden.

Die Erfindung betrifft weiterhin eine Bahnkantensteuerung mit einer derartigen Einrichtung, einer Steuereinrichtung und einer Bahnkantenregulierungseinrichtung sowie eine Druckmaschine mit einer derartigen Bahnkantensteuerung.

Zur Erfassung der Lage der Kante eines transparenten Materials ist es aus der US 5, 751, 443 bekannt, Licht derart auf das transparente Material zu richten, daß es reflektiert wird und dann das reflektierte Licht zu erfassen, um dadurch die Lage einer Kante zu ermitteln. Das Problem eines nach dieser Methode arbeitenden Sensors besteht darin, daß infolge einer Verschmutzung des Materials die Reflexionseigenschaft nachläßt und dadurch die Erfassung der Lage einer Kante ungenau oder unmöglich wird. Dies ist insbesondere bei umlaufenden Bahnen der Fall, die Güter transportieren, wie bei Druckmaschinen, insbesondere elektrophotografischen Druckmaschinen, die mit einer transparenten Bahn zur Förderung von Drucksubstraten ausgestattet sind. Derartige Bahnkanten müssen jedoch erfaßt werden, um die Lage der Bahn zu regeln.

Zur Lösung dieses Problems wurde von der DE 199 06 154.8 eine Einrichtung der eingangs genannten Art vorgeschlagen. Das Funktionsprinzip besteht darin, daß bei Polarisationsfiltern, die um 90° gekreuzte Transmissionsachsen aufweisen, kein Licht hindurchtritt, da den ersten Polarisationsfilter nur derart polarisiertes Licht passiert, das vom zweiten Polarisationsfilter gesperrt wird. Wird nun zwischen die Polarisationsfilter ein anisotropes Material mit einer ausgezeichneten optischen Achse gebracht, so kann ein Strahl oder Teilstrahl entstehen, dessen Polarisationsrichtung um 90° gedreht ist. Dieses Licht tritt durch den zweiten Polarisationsfilter hindurch, so daß es zu einer klaren Abbildung der Materialkante auf dem Lichtempfänger kommt. Diese Abbildung ist wesentlich unempfindlicher gegenüber Verschmutzungen als eine Abbildung aufgrund einer Reflexion. Das Problem dieses Vorschlags besteht jedoch darin, daß ein Strahl oder Teilstrahl mit gedrehter Polarisationsrichtung nicht auftritt, wenn das Licht entlang der optischen Achse des transparenten Materials in dieses eintritt. Das Licht muß also zur optischen Achse einen Winkel bilden, der gewährleistet, daß sich ein gut erfaßbarer, in seiner Polarisationsrichtung gedrehter Lichtanteil ergibt. Die optische Achse transparenter, anisotroper Materialien weist jedoch bedingt durch den Herstellungsvorgang und mechanische Spannungen auch bei einem Material gleicher chemischer Zusammensetzung unterschiedliche Ausrichtungen auf. Eine derartige Einrichtung muß also gegenüber der jeweiligen optischen Achse eine Ausrichtung erfahren, bei der der in seiner Polarisationsrichtung gedrehte Strahl in einer gut erfaßbaren Stärke entsteht. Diese Ausrichtung muß jedoch aus den o.g. Gründen mit jedem zu erfassenden Materialstück neu erfolgen. Handelt es sich um eine Bahn zum Transport eines Gutes, so ist mit jedem Austausch der Bahn gegen eine neue Bahn eine Ausrichtung des Sensors zur optischen Achse der neuen Bahn erforderlich. Dieses Problem kann auch schon mit einer Erhöhung oder Erniedrigung der mechanischen Spannung der Bahn auftreten.

Gegenüber diesem Vorschlag liegt der Erfindung die Aufgabe zugrunde, eine Einrichtung zur Erfassung der Lage einer Kante eines transparenten, anisotropen Materials derart auszugestalten, daß sie ohne Montagearbeiten für die Erfassung von Material mit unterschiedlich ausgerichteten optischen Achsen einsetzbar ist.

Die Aufgabe wird dadurch gelöst, daß der mindestens ein Sensor derart anordenbar und/oder ausgebildet ist, daß unterschiedliche Winkel zwischen der Transmissionsachse des ersten Polarisationsfilters und der optischen Achse des transparenten, anisotropen Materials möglich sind.

Damit ist eine Einrichtung verfügbar, welche die Kante eines transparenten, anisotropen Materials erfassen kann und wobei durch eine einfache Schwenkbewegung oder sonstige Positionsänderung mit Änderung der Winkelstellung des polarisierten Lichts eine Position erzielbar ist, in welcher die zur Erfassung des Materials erforderliche Ausrichtung zur optischen Achse des jeweiligen Materials möglich ist. Auf diese Weise ist eine exakte Erfassung einer derartigen Materialkante möglich, die relativ unempfindlich gegen Verschmutzung ist und dadurch insbesondere für Bahnkantensteuerungen umlaufender und Material transportierender Bahnen, wie beispielsweise der Bahnkantensteuerung bei transparenten, anisotropen Bahnen von elektrophotografischen Druckmaschinen die eingangs genannten Probleme löst.

Das Problem unterschiedlicher optischer Achsen tritt dabei vor allem dadurch auf, daß die optischen Achsen von Bahnen fertigungsbedingt unterschiedliche Ausrichtungen aufweisen und dadurch die Erfassung und Regelung der Lage einer solchen Bahn schwierig ist. Durch die erfindungsgemäße Einrichtung ist nunmehr eine Bahnkantensteuerung verfügbar, bei der der Strahlengang gegenüber der Kante einer zu erfassenden transparenten, anisotropen Bahn derart ausgerichtet oder ausrichtbar ist, daß er auf alle möglichen Verläufe optischer Achsen infolge einer Änderung der optischen Achse der/einer Bahn einstellbar ist, ohne daß dazu Montagearbeiten erforderlich sind. Zu diesem Zweck kann ein Sensor schwenkbar angeordnet sein, es können mehrere Sensoren in verschiedenen Winkelstellungen angeordnet sein und der entsprechende Sensor ausgewählt werden oder es ist ein Strahlengang eines Sensors derart umstellbar ausgebildet, daß er und damit das polarisierte Licht verschiedene Winkelstellungen zu dem zu erfassenden Material und damit zu dessen optischer Achse einnehmen kann.

Durch die erfindungsgemäße Einrichtung wird insbesondere bei Druckmaschinen der Wartungsaufwand, der Einsatz von Montagepersonal und die Maschinenstillstandszeit bei einem Wechsel der Bahn verringert. Auch bei einer Änderung der mechanischen Spannung einer Bahn und einer damit einhergehenden Änderung der Lage der optischen Achse kann die Einrichtung bezüglich der Ausrichtung des Strahlengangs ohne großen Aufwand nachgestellt werden. Ein weiteres Einsatzgebiet der Erfindung ist die Erfassung der Kanten einzelner Materialstücke, da auch in diesem Fall dem unterschiedlichen Verlauf der optischen Achsen Rechnung getragen werden muß.

Durch die erfindungsgemäße Einrichtung kann auf einfache Weise erreicht werden, daß das polarisierte Licht zum Material eine Winkelstellung einnimmt, bei der eine Drehung des aus dem ersten Polarisationsfilter austretenden Lichts durch das zu erfassende Material in einem zu Erfassung einer Kante ausreichenden Maß stattfindet, wobei vorzugsweise ein Winkel zwischen der Transmissionsachse des ersten Polarisationsfilters und der optischen Achse des transparenten, anisotropen Materials gewählt ist, bei dem eine möglichst gute Abbildung der Kante auf dem Lichtempfänger möglich ist. Ein Optimum wird bei einem Winkel von 45° erreicht, jedoch ist ein Winkel in einem Bereich zwischen 25° und 65° zur Abbildung einer Kante ausreichend.

Es gibt verschiedene Möglichkeiten der Ausgestaltung der Verbringbarkeit des Sensors in verschiedene Positionen zur Erzielung der genannten Winkel oder einer sonstigen Bereitstellung verschiedener Winkelstellungen des polarisierten Lichts zum zu erfassenden Material. Es kann vorgesehen sein, daß der Winkel zwischen der Transmissionsachse und der optischen Achse exakt eingestellt wird oder daß eine Winkelstellung eines Sensors gewählt wird, die im Bereich der Winkel von 25° bis 65° liegt. Oft reicht es aus, daß zwei definierte Winkelstellungen vorgesehen sind und zum jeweiligen Material die Winkelstellung gewählt wird, bei der die Kante besser abgebildet ist. Es ist jedoch auch möglich, daß ein Vielzahl definierter Winkelstellungen vorgesehen ist und zum jeweiligen Material die Winkelstellung gewählt wird, bei der die Kante besser abgebildet wird. Letzteres oder eine exakte Einstellung des Winkels ist zweckmäßig, wenn die Ausrichtungen der optischen Achsen des zu erfassenden Materials nicht auf einen bestimmten Winkelbereich beschränkt ist, sondern die optischen Achsen alle möglichen unterschiedlichen Richtungen einnehmen können oder wenn es für eine gute Abbildung der Kante erforderlich ist, daß ein möglichst optimaler Winkel gewählt wird, beispielsweise wenn ein Material verminderter Transparenz, zum Beispiel durch Verschmutzung, erfaßt werden muß.

Es kann vorgesehen sein, daß der Sensor von Hand in die verschiedenen Positionen schwenkbar und dort arretierbar ist. Dies ist mit einer beliebigen einfachen Mechanik realisierbar. Es kann jedoch auch vorgesehen sein, daß ein Antrieb vorgesehen ist, der einen Sensor in die optimalste Position von möglichen Positionen mit verschiedenen Winkelstellungen verbringt. Dies ist von Vorteil, wenn der Sensor an einer Stelle der Maschine angeordnet ist, die schwer zugänglich ist. Weiterhin kann eine Steuerung vorgesehen sein, die mit dem Lichtempfänger verbunden ist und die die Winkelstellung zur Abbildung der Kante auf dem Lichtempfänger auswählt. Sie kann beispielsweise die Verbringung eines Sensors ein seine optimale Position veranlassen. Beispielsweise kann die Steuerung dafür sorgen, daß mehrere Positionen durchgeschaltet werden und die kontrastreichste Abbildung der Kante gewählt wird. Sie kann aber auch aus Winkelstellungen mehrerer in beliebiger Weise installierter Strahlengänge den optimalsten Strahlengang aussuchen oder einen Strahlengang in entsprechender Weise verstellen. Eine derartige Vorrichtung ist sehr komfortabel, da keinerlei Bedienungsaufwand mehr erforderlich ist. Handelt es sich bei dem zu erfassenden Material um einzelne transportierte Stücke, welche optische Achsen verschiedener Ausrichtung aufweisen, so ist eine derartige Steuerung eine sehr zweckmäßige Lösung, da sie automatisch eine gute Erfassung der Kanten gewährleistet.

Eine Steuerung kann weiterhin derart ausgebildet sein, daß sie die Intensität der Lichtquelle und/oder die Ansprechempfindlichkeit des Lichtempfängers regelt. Dies hat den Vorteil, daß die Vorrichtung auf eine Änderung von Umständen automatische reagiert und dadurch die einwandfreie Abbildung der Kante gewährleistet. Solche Änderungen können darin bestehen, daß eine Verschmutzung auftritt oder daß Materialien verschieden starker Lichtdurchlässigkeit erfaßt werden sollen.

Die Steuerung kann die Einstellwerte aufgrund eines entsprechenden Algorithmuses eines Programmes regeln oder es ist möglich, daß in der Steuerung Einstellwerte für definierte Positionen hinterlegt sind. Auf diese Weise ist eine optimale Einstellung gewährleistet.

Der Lichtempfänger kann aus mehreren Empfangselementen gebildet sein, beispielsweise kann er als Zeile von Empfangselementen ausgebildet sein, z. B. aus einer CCD-Zeile, oder es ist möglich, daß der Lichtempfänger als Flächenempfänger ausgebildet ist. Mit diesen Anordnungen werden digitale Positionswerte zur Weiterverarbeitung in einer elektronischen Steuerung gewonnen. Dabei hat ein Flächenempfänger den Vorteil, daß mittels eines einzigen Empfängers auch die Schräglage einer Kante erfaßt werden kann.

Die Erfindung wird nachfolgend anhand der Zeichnung erläutert. Es zeigen
- **Fig. 1**: ein Ausführungsbeispiel einer erfindungsgemäßen Bahnkantensteuerung mit einer erfindungsgemäßen Einrichtung, die als schwenkbarer Sensor ausgebildet ist,
- **Fig. 2**: das Funktionsprinzip eines solchen Sensors,
- **Fig. 3a, 3b und 3c**: die Auswirkungen von verschiedenen Winkelstellungen des polarisierten Lichts zu einem Material mit verschiedenen Winkelstellungen der optischen Achse bezüglich des Wirkungsgrades eines Sensors und
- **Fig. 4**: ein Beispiel für produktionsbedingte unterschiedliche Winkelstellungen der optischen Achse einer Bahn.

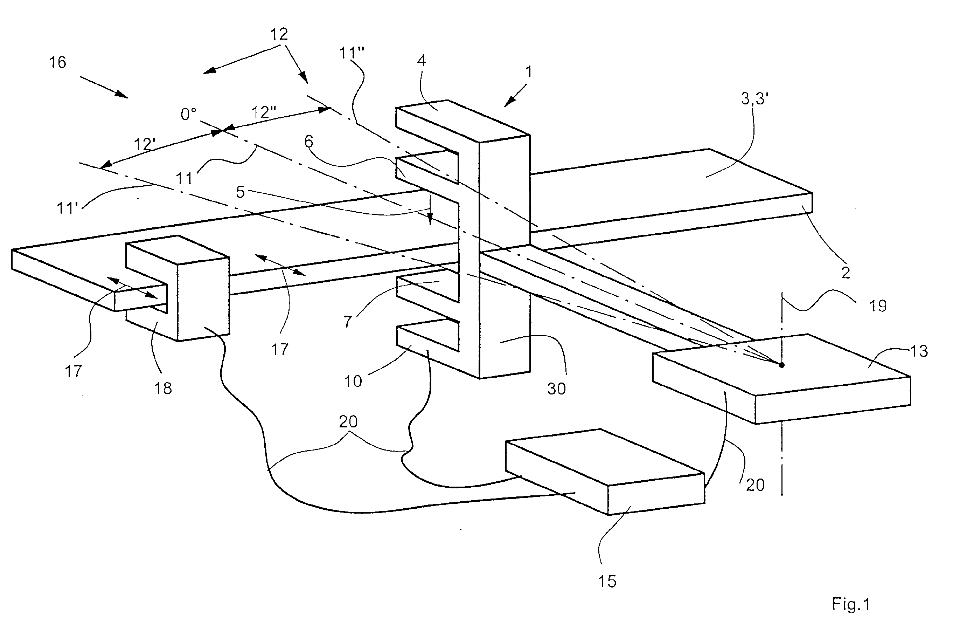

**Fig. 1** zeigt ein Ausführungsbeispiel einer erfindungsgemäßen Bahnkantensteuerung 16 mit einer erfindungsgemäßen Einrichtung, die als schwenkbarer Sensor 1 ausgebildet ist. Der Sensor 1 dient der Erfassung einer Kante 2 eines transparenten, anisotropen Materials 3, beispielsweise einer transparenten Bahn 3'.

Der Sensor 1 besteht aus einer Lichtquelle 4 und zwei Polarisationsfiltern 6, 7, deren Transmissionsachsen 8, 9 um 90° gekreuzt sind. Weiterhin ist ein Lichtempfänger 10 angeordnet, der beispielsweise als CCD-Zeile ausgebildet ist oder als Array von Empfangselementen. Die Lichtquelle 4 und der erste Polarisationsfilter 6 befinden sich auf der einen Seite des bezüglich seiner Kante 2 zu erfassenden transparenten, anisotropischen Materials 3 oder 3' und der zweite Polarisationsfilter 7 mit dem Lichtempfänger 10 befinden sich auf der anderen Seite des Materials 3, 3'.

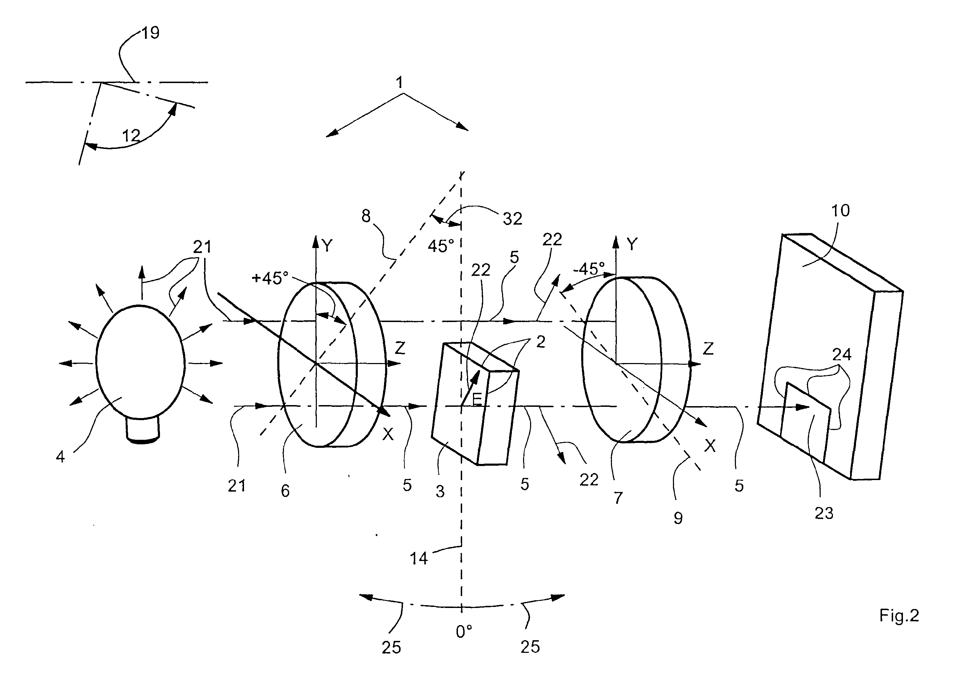

Die Erfindung schlägt vor, die Lichtquelle 4, die Polarisationsfilter 6, 7 sowie den Lichtempfänger 10 derart anordenbar auszubilden, daß der Sensor 1 verschiedene Positionen 11, 11', 11", ... einnehmen kann, in denen das polarisierte Licht 5 verschiedene Winkelstellungen 12, 12', 12", ... zu dem zu erfassenden Material 3, 3' einnehmen kann, wobei die Positionen 11, 11', 11", ... mit den verschiedenen Winkelstellungen 12, 12', 12", ... dazu dienen, einen Winkel 32 der Transmissionsachse 8 des ersten Polarisationsfilters 5 zur optischen Achse 14 des Materials 3, 3' aufzufinden (siehe Fig. 2), in dem eine gute Erfassung der Kante 2 möglich ist. Zu diesem Zweck ist der Sensor 1 derart ausgebildet, daß sich die Lichtquelle 4, die Polarisationsfilter 6, 7 sowie der Lichtempfänger 10 auf einem gemeinsamen Träger 30 befinden, der um eine Schwenkachse 19 schwenkbar ist. Diese Schwenkbarkeit ist derart ausgestaltet, daß sich der Sensor 1 von der gezeichneten Position 11 in andere Positionen 11', 11", ... bewegen läßt, um eine Position 11, 11', 11", ... auswählen zu können, in der das polarisierte Licht 5 mit der optischen Achse 14 des Materials 3, 3' einen ausreichenden Winkel bildet, um einen Lichtanteil zu gewährleisten, dessen Polarisationsrichtung 22 gedreht ist und der ausreichend intensiv ist, um ihn mit dem Lichtempfänger 10 erfassen zu können. Zu diesem Zweck kann der Sensor 1 und damit das polarisierte Licht 5 die im Ausführungsbeispiel dargestellten Winkelstellungen 12' oder 12" einnehmen. Dabei ist es möglich, die beiden dargestellten Positionen 12', 12" vorzusehen oder es können auch beliebige Winkelstellungen 12 innerhalb des mechanisch möglichen Schwenkbereichs als mögliche Positionen vorgesehen sein.

Ein derartiger Sensor 1 kann von Hand schwenkbar und in verschiedenen Positionen 11, 11', 11", ... arretierbar ausgebildet sein. Im dargestellten Ausführungsbeispiel ist ein Antrieb 13 vorgesehen, der den Sensor 1 in die verschiedenen Positionen 11, 11', 11", ... bewegen kann. Dazu dient eine Steuerung 15, die durch eine Verbindungsleitung 20 mit dem Lichtempfänger 10 verbunden ist und welche eine Position 11, 11', 11", ... des Sensors 1 aussucht und mittels des Antriebs 13 die Einnahme einer Position 11, 11', 11", ... veranlaßt, in der die Kante 2 sich deutlich auf dem Lichtempfänger 10 abbildet. Ist eine solche deutliche Abbildung erzielt, so veranlaßt die Steuerung 15 aufgrund der vom Lichtempfänger 10 ermittelten Werte eine Stellbewegung 17 zur Erzielung der Sollposition der Kante 2 mittels einer Bahnkantenstelleinrichtung 18, die ebenfalls durch eine Verbindungsleitung 20 mit der Steuerung 15 verbunden ist. Bei dem Antrieb 13, der Steuerung 15 und der Bahnkantenstelleinrichtung 18 handelt es sich um eine Prinzipdarstellung. Die Ausgestaltung dieser Elemente kann beliebig sein, wobei ein solcher Antrieb und die Steuerung auch die oben erwähnte vertikale Achse stellen können.

**Fig. 2** zeigt das Funktionsprinzip des Sensors 1. Die Lichtquelle 4 sendet unpolarisiertes Licht 21 aus, wobei der erste Polarisationsfilter 6 nur polarisiertes Licht 5 hindurchläßt, das eine in seiner Transmissionsachse 8 liegende Polarisationsrichtung 22 aufweist. Dabei befindet sich im dargestellten Beispiel die Transmissionsachse 8 zu einem Koordinatensystem x, y, z in einem Winkel von +45° zur y-Achse in der y-z-Ebene. Soweit dieses polarisierte Licht 5 nicht auf ein transparentes, anisotropes Material 3 oder 3' trifft, behält es die Polarisationsrichtung 22 bei und trifft auf den zweiten Polarisationsfilter 7, dessen Transmissionsachse 9 zur Transmissionsachse 8 des ersten Polarisationsfilter 6 um 90° gedreht ist, also einen Winkel von -45° zur y-Achse aufweisend in der y-z-Ebene liegt. Dadurch kann das polarisierte Licht 5 der oberhalb des transparenten Materials 3 verlaufenden Strahlen nicht durch den zweiten Polarisationsfilter 7 hindurchtreten. Anders verhält es sich mit den Strahlen des polarisierten Lichts 5, die auf das transparente, anisotrope Material 3 treffen. Durch den Verlauf der optischen Achse 14 des Materials 3 kommt es bezüglich eines Anteils des Lichtes 5 zu einer Drehung der Polarisationsrichtung 22, durch welche dieser Anteil des Lichts 5 in Richtung der Transmissionsachse 9 des zweiten Polarisationsfilters 7 polarisiert ist und daher durch den zweiten Polarisationsfilter 7 hindurchtreten kann. Das durch den zweiten Polarisationsfilter 9 hindurchtretende polarisierte Licht 5 wird durch einen Lichtempfänger 10 erfaßt. Dabei entsteht eine beleuchtete Fläche 23 mittels dieses polarisierten Lichts 5. Dabei werden auch die Kanten 2 des Materials 3 als Kanten 24 abgebildet. Auf diese Weise wird die Lage des transparenten Materials 3 und seiner Kanten 2 exakt erfaßt. Die übrige Fläche des Lichtempfängers 10 bleibt dunkel, da das nicht durch das transparente Material 3 in seiner Polarisationsrichtung 22 gedrehte polarisierte Licht 5 mittels des zweiten Polarisationsfilters 7 gesperrt ist.

Die Erfindung dient der Einrichtung der Transmissionsachse 8 des ersten Polarisationsfilters 6 zur optischen Achse 14, um durch die gewählte Winkelstellung 12 zu gewährleisten, daß das am Lichtempfänger 10 ankommende polarisierte Licht 5 eine derartige Stärke aufweist, daß die Kanten 2 als deutlich abgebildete Kanten 24 erfaßt werden können. Die Winkelstellung 12 läßt sich durch eine Schwenkung erzielen, die entsprechend der Darstellung in Fig. 1 um die strichpunktiert eingetragene Achse 19 in Richtung der strichpunktierten, die Winkelstellungen 12 andeutenden Pfeile erfolgt. Da die Schwenkung in der y-z-Ebene stattfindet, ändert sie die Winkelstellung 12 zwischen dem polarisierten Licht 5 und dem zu erfassenden Material 3, 3' und damit zwischen Transmissionsachse 8 und optischer Achse 14. Vollzieht sich die Änderung der Winkelstellung 25 der optischen Achse 14 des Materials 3, 3' ebenfalls in der y-z-Ebene, wie dies durch die strichpunktierten Pfeile, die die Winkelstellung 25 symbolisieren, dargestellt ist, so kann innerhalb dieser Ebene eine Zuordnung des Verlaufs der Transmissionsachse 8 zu optischen Achse 14 erzielt werden, die eine Drehung der Polarisationsrichtung 22 in ausreichendem Maß gewährleistet.

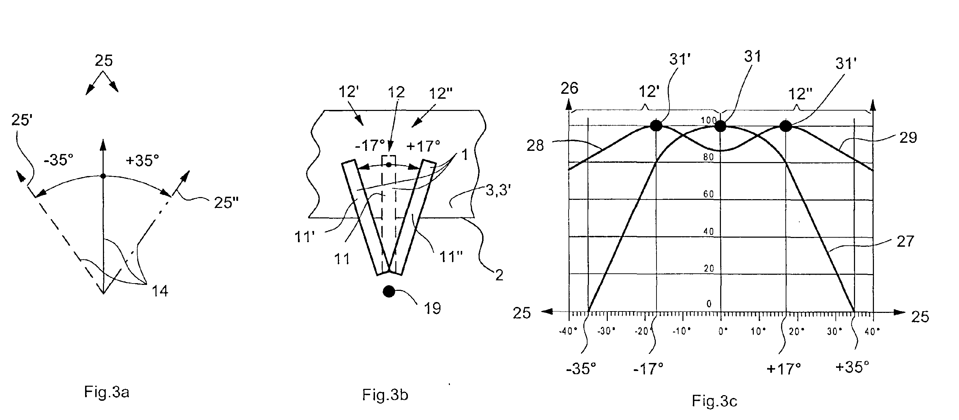

Die **Fig. 3a, 3b und 3c** zeigen Auswirkungen von verschiedenen Winkelstellungen 12, 12', 12", ... des polarisierten Lichts 5 zu einem Material 3, 3' mit verschiedenen Winkelstellungen 25, 25', 25", ... der optischen Achse 14 bezüglich des Wirkungsgrades 26 eines Sensors 1.

Dabei zeigt die **Fig. 3a** verschiedene Winkelstellungen 25 der optischen Achse 14 des Materials 3, wobei sich die Winkelstellung 25' bei -35° und die Winkelstellung 25" bei + 35° befindet. Der dazwischen liegende Bereich ist ein üblicher Bereich von Schwankungen von Winkelstellungen 25 von optischen Achsen 14 bei der Herstellung von transparenten Bahnen 3'.

Die **Fig. 3b** zeigt Schwenkbewegungen des Sensors 1, um diesen derart einzustellen, daß der Sensor 1 die Kante 2 eines Materials 3, 3' erfassen kann, obwohl verschiedene Winkelstellungen 25 der optischen Achse 14 des transparenten Materials 3, 3' auftreten. Dazu schlägt das Ausführungsbeispiel der **Fig. 3b** vor, daß der Sensor 1 eine Winkelstellung 12' von -17° oder eine Winkelstellung 12" von +17° einnimmt. Er befindet sich also nicht in der gestrichelt gezeichneten 0°-Position 11, sondern in einer der Position 11' oder 11" gegenüber dem zu erfassenden Material 3 oder 3'. Dabei ist die Schwenkung des Sensors 1 nur ein Beispiel dafür, daß das polarisierte Licht 5 verschiedene Winkelstellungen 12, 12', 12", ... zum zu erfassenden Material 3, 3' einnehmen kann. Weitere Möglichkeiten, polarisiertes Licht 5 in verschiedenen Winkelstellungen 12, 12', 12", ... zu installieren, sind denkbar.

**Fig. 3c** zeigt die Auswirkung der Winkelstellungen 12 oder 12' auf den Wirkungsgrad 26 des Sensors 1. Dabei zeigt die Kurve 27 zum Vergleich den Wirkungsgrad 26 eines Sensors 1, der sich in der in Fig. 3b gestrichelt gezeichneten Position 11 befindet. Dabei nimmt das polarisierte Licht 5 im Punkt 31 eine Winkelstellung von 0° zum Material 3 ein, wobei durch die Lage der Transmissionsachse 8 um 45° versetzt zur optischen Achse 14 (siehe Fig. 2) der maximal mögliche Wirkungsgrad 26 von 100% erzielt wird. Eine derartige Positionierung hat jedoch den Nachteil, daß der Wirkungsgrad bis zu Winkeln 25 der optischen Achse 14 von -35° oder +35° auf 0 abfällt und daher der Sensor 1 außer Funktion ist.

Das Ausführungsbeispiel schlägt daher vor, daß der Sensor 1 in die zwei Positionen 11' und 11" verbringbar ist, die in **Fig. 3b** dargestellt sind. Die Auswirkung ist in der **Fig. 3c** mittels der Kurven 28 und 29 eingezeichnet. Dabei zeigt die Kurve 28 den Wirkungsgrad eines Sensors 1, bei dem sich das polarisierte Licht 5 in der Winkelstellung 12', also bei -17° bezüglich der Senkrechten auf der Oberfläche des Materials 3 befindet. Der andere Kurventeil 29 erstreckt sich im Gegensatz zum Kurventeil 28 im positiven Bereich und stellt den Wirkungsgrad 29 eines Sensors 1 dar, bei dem sich das polarisierte Licht 5 in der Winkelstellung 12" von +17° bezüglich der Senkrechten auf der Oberfläche des Materials 3 befindet. Dabei sind die beiden Winkelstellungen 12' und 12" derart ausgelegt, daß der optimale Wirkungsgrad 26 in diesen Winkelstellungen 12' und 12" also bei -17° oder +17° gewährleistet ist. In diesen Punkten 31 und 31' werden 100% der möglichen Wirkung 26 dadurch erzielt, daß sich in der Winkelstellung 12' und 12" des polarisierte Lichts 5 jeweils die Transmissionsachse 8 in einem Winkel von 45° zu einer optischen Achse 14 befindet (siehe Fig.2). Es ist also daraus zu ersehen, wie schon durch die Einnahme von zwei möglichen Winkelstellungen 12' und 12" erreicht werden kann, daß ein transparentes Material 3, 3' erfaßbar ist, dessen optische Achse 14 sich in einem Winkelbereich 25 von weit über +40° bis -40° bewegt, wobei bei einem Winkel von 35° der Wirkungsgrad 26 immer noch bei mindestens 80% liegt. Es sind daher Materialien bis zu Winkelabweichungen 25 der optischen Achsen 14 von ± 45° bezogen auf die 0°-Position noch gut erfaßbar, was bei der Position 12 nicht möglich ist.

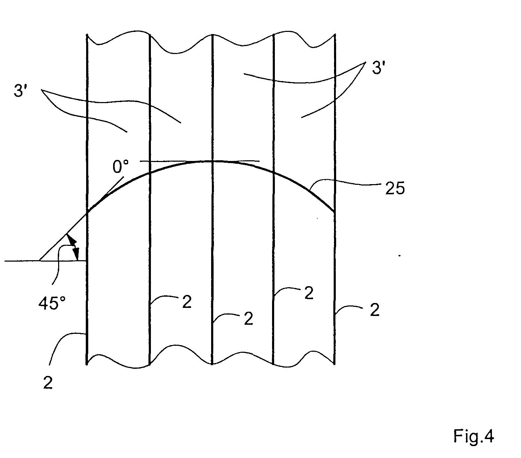

**Fig. 4** zeigt ein Beispiel für produktionsbedingte Winkelstellungen 25 der optischen Achse 14 von transparenten, anisotropen Bahnen 3'. Bei der Produktion solcher Bahnen 3' werden aus wirtschaftlichen Gründen oftmals breitere Bahnen hergestellt, aus denen dann mehrere Bahnen 3' geschnitten werden. Produktionsbedingt tritt dabei ein Verlauf von Winkelstellungen 25 der optischen Achsen 14 auf, der dem eingezeichneten Verlauf entspricht. Damit kann der Verlauf der optischen Achse 14 beispielsweise zwischen 0° und maximal ±45° variieren, wobei auch bei den einzelnen Bahnen 3' über ihre Breite gesehen gewisse Winkelunterschiede anzutreffen sind. Der Sensor 1 muß also auf die Winkelstellung 25 der optischen Achse 14 in dem Bereich einer Bahn 3' eingestellt werden, in dem die Kante 2 erfaßt werden soll. Dies ist durch die Schwenkbewegung des erfindungsgemäßen Sensors 1 oder einer sonstigen Änderung der Winkelstellung 25, 25', 25", ... des polarisierten Lichts 5 kein Problem und es ist möglich, derartige Bahnen 3 genau zu erfassen und die Position der Bahnen 3' durch eine Stellbewegung 17 auf der Grundlage dieser Erfassung zu regeln. Dies ist gerade bei elktrophotographischen Druckmaschinen von besonderer Bedeutung, da dort Bahnen 3' der in Fig. 4 gezeichneten Art verwendet werden und bei einem Wechsel einer Bahn 3' eine Bahnkantensteuerung 16 ohne Zeitverlust auf den neuen Verlauf der optischen Achse 14 einstellbar sein muß, um die Maschine mit einer minimalen Stillstandszeit weiter zu betreiben. Außerdem ist es durch die Erfindung möglich, daß der Betreiber der Druckmaschine die Bahn 3' selbst wechseln kann, da keine aufwendigen Arbeiten zur Einstellung des Sensors 1 erforderlich sind.

Die Darstellungen sind selbstverständlich nur beispielhaft, sie zeigen eine Möglichkeit, wie ein Sensor 1 und eine Bahnkantensteuerung 16 realisiert werden können und verdeutlichen das Funktionsprinzip der Erfindung. Verschiedene Positionen eines Sensors 1 können nicht nur durch Schwenkbewegungen um eine Schwenkachse 19 erzielt werden, sondern es ist auch möglich, mittels anderer mechanischer Vorrichtungen zur Positionierung des Sensors 1 in verschiedenen Positionen 11, 11', 11", ... auch einen noch größeren Stellbereich zu erzielen. Weiterhin ist es möglich, auch beliebige Positionen 11 des Sensors 1 vorzusehen oder eine definierte Anzahl mehrerer Positionen 11, 11', 11", .... Die jeweilige Ausgestaltung richtet sich danach, wie ein derartige Sensor 1 konkret eingesetzt werden soll.

Selbstverständlich kann statt einer mechanischen Positionierung - wie bereits erwähnt - auch eine Anordnung mehrerer Sensoren 1 vorgesehen sein oder die Winkelstellungen 12, 12', 12", ... können durch eine Auswahl eines Sensors 1 aus in verschiedenen Winkelstellungen 12, 12', 12", ... positionierten Sensoren 1 bestimmt werden. Auch ist es möglich, einen Sensor 1 mit optischen Wegen verschiedener Winkelstellungen 12, 12', 12", ... auszustatten, von denen einer ausgewählt wird, um die Kante 2 eines Materials 3, 3' zu erfassen. Auch können verstellbare optische Wege vorgesehen sein.

### Bezugszeichenliste

- 1: Sensor
- 2: Kante
- 3,3': transparentes, anisotropes Material
- 3': transparente Bahn
- 4: Lichtquelle
- 5: polarisiertes Licht
- 6: erster Polarisationsfilter
- 7: zweiter Polarisationsfilter
- 8: Transmissionsachse des ersten Polarisationsfilters
- 9: Transmissionsachse des zweiten Polarisationsfilters
- 10: Lichtempfänger
- 11, 11', 11", ...: Positionen des Sensors
- 12, 12', 12", ...: Winkelstellungen des polarisierten Lichts zum transparenten Material, z. B. als Winkelstellungen eines Sensors
- 13: Antrieb des Sensors
- 14: optische Achse des transparenten Materials / der transparenten Bahn
- 15: Steuerung
- 16: Bahnkantensteuerung
- 17: Stellbewegungen für die Bahnkante
- 18: Bahnkantenstelleinrichtung
- 19: Schwenkachse
- 20: Verbindungsleitungen
- 21: unpolarisiertes Licht
- 22: Polarisationsrichtung
- 23: beleuchtete Fläche des Lichtempfängers
- 24: abgebildete Kanten
- 25, 25', 25": Winkelstellungen der optischen Achse des transparenten, anisotropen Materials
- 26: Wirkungsgrad des Sensors
- 27: Wirkungsgrad eines Sensors bei einer Winkelstellung 25 der optischen Achse 14 zwischen -40° und +40°, wenn die Winkelstellung des Sensors bei 0° das Optimum erbringt (d.h. die Transmissionsachse 8 einen Winkel von 45° zu optischen Achse 14 bildet)
- 28: Wirkungsgrad eines Sensors bei einer Winkelstellung 25 der optischen Achse 14 zwischen -40° und 0°, wenn die Winkelstellung des Sensors bei -17° das Optimum erbringt (d.h. die Transmissionsachse 8 einen Winkel von 45° zu optischen Achse 14 bildet)
- 29: Wirkungsgrad eines Sensors bei einer Winkelstellung 25 der optischen Achse 14 zwischen 0° und +40°, wenn die Winkelstellung des Sensors bei +17° das Optimum erbringt (d.h. die Transmissionsachse 8 einen Winkel von 45° zur optischen Achse 14 bildet)
- 30: gemeinsame Träger
- 31, 31': Punkte maximalen Wirkungsgrades (100%) durch eine Lage der Transmissionsachse 8 in einem Winkel von 45° zu optischen Achse 14
- 31: Punkt bei **einer** möglichen Winkelstellung
- 31': Punkte bei **zwei** möglichen Winkelstellungen
- 32: Winkel zwischen der Transmissionsachse 8 des ersten Polarisationsfilters und der optischen Achse 14 des transparenten anisotropen Materials

## Patentansprüche

1. Einrichtung zur Erfassung der Lage einer Kante (2) eines transparenten, anisotropen Materials (3, 3') bestehend aus mindestens einem Sensor (1) mit einer Lichtquelle (4), zwei Polarisationsfiltern (6, 7) mit um 90° gekreuzten Transmissionsachsen (8, 9) sowie einem Lichtempfänger (10), wobei sich die Lichtquelle (4) und ein Polarisationsfilter (6) auf einer Seite der zu erfassenden Kante (2) und der zweite Polarisationsfilter (7) und der Lichtempfänger (10) auf der anderen Seite befinden und wobei der mindestens eine Sensor (1) derart anordenbar und/oder ausgebildet ist, daß unterschiedliche Winkel (32) zwischen der Transmissionsachse (8) des ersten Polarisationsfilters (6) und der optischen Achse (14) des transparenten, anisotropen Materials (3,3') möglich sind.

2. Einrichtung nach Anspruch 1,
**dadurch gekennzeichnet,**
**daß** ein Winkel (32) gewählt ist, bei der eine Drehung des aus dem ersten Polarisationsfilter (6) austretenden Lichts (5) durch das zu erfassende Material (3, 3') in einem zur Erfassung einer Kante (2) ausreichenden Maß stattfindet.

3. Einrichtung nach Anspruch 2,
**dadurch gekennzeichnet,**
**daß** ein Winkel (32) gewählt ist, bei der eine möglichst gute Abbildung der Kante (2) auf dem Lichtempfänger (10) möglich ist.

4. Einrichtung nach Anspruch 3,
**dadurch gekennzeichnet,**
**daß** die Transmissionsachse (8) des ersten Polarisationsfilters (6) zur optischen Achse (14) des transparenten Materials (3, 3')einen Winkel im Bereich zwischen 25° und 65° bildet.

5. Einrichtung nach einem der Ansprüche 1 bis 4,
**dadurch gekennzeichnet,**
**daß** zwei definierte Winkelstellungen (12', 12") vorgesehen sind und zum jeweiligen Material (3, 3') die Winkelstellung (12' oder 12") gewählt wird, bei der die Kante (2) besser abgebildet wird.

6. Einrichtung nach Anspruch 5,
**dadurch gekennzeichnet,**
**daß** eine Vielzahl definierter Winkelstellungen (12', 12") vorgesehen ist und zum jeweiligen Material (3, 3') die Winkelstellung (12', 12") gewählt wird, bei dem die Kante (2) besser abgebildet wird.

7. Einrichtung nach Anspruch 5 oder 6,
**dadurch gekennzeichnet,**
**daß** ein Antrieb (13) vorgesehen ist, der einen Sensor (1) in die optimalste Position (11, 11', 11", ...) verbringt.

8. Einrichtung nach einem der Ansprüche 2 bis 7,
**dadurch gekennzeichnet,**
**daß** eine Steuerung (15) vorgesehen ist, die mit dem Lichtempfänger (10) verbunden ist und die Winkelstellung (12', 12") zur Abbildung der Kante (2) auf dem Lichtempfänger (10) auswählt.

9. Einrichtung nach einem der Ansprüche 1 bis 8,
**dadurch gekennzeichnet,**
**daß** eine Steuerung (15) vorgesehen ist, die die Intensität der Lichtquelle (4) regelt.

10. Einrichtung nach einem der Ansprüche 1 bis 9,
**dadurch gekennzeichnet,**
**daß** eine Steuerung (15) vorgesehen ist, die die Ansprechempfindlichkeit des Lichtempfängers regelt.

11. Einrichtung nach einem der Ansprüche 5 bis 10,
**dadurch gekennzeichnet,**
**daß** in der Steuerung (15) Einstellwerte für definierte Winkelstellungen (12', 12") hinterlegt sind.

12. Einrichtung nach einem der Ansprüche 1 bis 11,
**dadurch gekennzeichnet,**
**daß** der Lichtempfänger (10) aus mehreren von Empfangselementen gebildet ist.

13. Einrichtung nach einem der Ansprüche 1 bis 11,
**dadurch gekennzeichnet,**
**daß** der Lichtempfänger (10) als Flächenempfänger ausgebildet ist.

14. Einrichtung nach einem der Ansprüche 1 bis 11,
**dadurch gekennzeichnet,**
**daß** der Lichtempfänger (10) aus einer Zeile von Empfangselementen besteht.

15. Bahnkantensteuerung (16) mit einer Einrichtung nach einem der Ansprüche 1 bis 14, einer Steuerung (15) und einer Bahnkantenstelleinrichtung (18),
**dadurch gekennzeichnet,**
**daß** der mindestens eine Sensor (1) gegenüber der Kante (2) einer zu erfassenden transparenten, anisotropen Bahn (3') derart ausgebildet und/oder angeordnet ist,
**daß** alle möglichen Verläufe optischer Achsen (14) infolge einer Änderung der optischen Achse (14) der/einer Bahn (3') berücksichtigt werden können.

16. Druckmaschine mit einer transparenten, anisotropen Bahn (3') zur Förderung von Drucksubstraten,
**gekennzeichnet durch** eine Bahnkantensteuerung (16) nach Anspruch 15.
